# EUROPÄISCHE PATENTANMELDUNG

(11) **EP 1 584 844 A1**
(43) Veröffentlichungstag der Anmeldung: **12.10.2005**
(21) Anmeldenummer: 04405217.3
(22) Anmeldetag: 08.04.2004
(51) Int. Cl.: F16H 55/06, F16H 55/17, F16H 55/26, F16H 19/02

(54) **Vorrichtung zur Übertragung einer Antriebsbewegung**

(71) Anmelder: Schneeberger Holding AG, 4914 Roggwil (CH)
(72) Erfinder: Kellerhals, Erwin, 3122 Kehrsatz (CH); Schneeberger, Hans-Martin, 4900 Langenthal (CH)
(74) Vertreter: EGLI-EUROPEAN PATENT ATTORNEYS

(57) **Zusammenfassung**

Um bei einer Übertragungsvorrichtung zur Übertragung einer Antriebsbewegung von einer Antriebsseite auf eine Abtriebsseite, bei der zur Übertragung ein erstes Übertragungselement (110) mit einem zweiten Übertragungselement (120) in Wirkverbindung steht, eines der beiden Übertragungselemente (110) von der Antriebsbewegung angetrieben wird und beide Übertragungselemente (110, 120) mit geometrisch bestimmten Eingriffselementen (112, 122) versehen sind, die durch einen im wesentlichen formschlüssigen Eingriff ineinander im Bereich einer Eingriffstrecke die Übertragung der Antriebsbewegung von einem auf das andere Übertragungselement (110, 120) ermöglichen, wobei zumindest eines der Übertragungselemente (110) eine mit einer Krümmung versehene Aussenfläche aufweist, an der Eingriffselemente (112) angeordnet sind, eine Vergrösserung der Eingriffsstrecke zu ermöglichen, wird vorgeschlagen, dass zumindest eines der Übertragungselemente (120) im Bereich der Eingriffstrecke (122) verformbar ist. Dabei bildet sich die Verformung an der jeweiligen Stelle des Übertragungselements (120) durch den Eingriff aus. Sie bildet sich zurück, sobald die Stelle ausser Eingriff gerät.

## Beschreibung

Die Erfindung betrifft eine Übertragungsvorrichtung zur Übertragung einer Antriebsbewegung von einer Antriebsseite auf eine Abtriebsseite, wobei zur Übertragung ein erstes Übertragungselement mit einem zweiten Übertragungselement in Wirkverbindung steht, eines der beiden Übertragungselemente von der Antriebsbewegung angetrieben wird, beide Übertragungselemente mit geometrisch bestimmten Eingriffselementen versehen sind, die durch einen im wesentlichen formschlüssigen Eingriff ineinander im Bereich einer Eingriffstrecke die Übertragung der Antriebsbewegung von einem auf das andere Übertragungselement ermöglichen, wobei zumeist eines der Übertragungselemente eine mit einer Krümmung versehene Aussenfläche aufweist, an der Eingriffselemente angeordnet sind.

Bei vielen Maschinen, Anlagen, Geräten oder dergleichen wird zur Erzeugung einer Bewegung ein Antrieb verwendet, der eine Rotationsbewegung zur Verfügung stellt. Diese Rotationsbewegung muss von der Position des Antriebs zu einer Nutzstelle übertragen werden und hierbei gegebenenfalls in eine geradlinige Bewegung oder eine Bewegung mit zumindest einem translatorischen Anteil transformiert werden.

Solche Anwendungsgebiete sind beispielsweise Linearbewegungsführungen, die eine profilierte Führungsschiene und zumindest einen auf der Schiene angeordneten Wagen oder Führungspartner aufweisen. Der Wagen stützt sich über Wälzkörper auf der Schiene ab und ist durch einen Antrieb relativ zur Schiene verfahrbar. Ein anderes Anwendungsgebiet, das für die Erfindung von besonderer Bedeutung ist, sind Gleitlager für Linearbewegungen.

Zu diesen Zwecken werden üblicherweise Getriebe verwendet, die in unterschiedlicher Weise ausgebildet sein können. In einer ersten weit verbreiten Ausbildung sind die Getriebe als Zahnradgetriebe gestaltet. Hierbei kämmt eine Verzahnung eines als Zahnrad vorgesehenes erstes Getriebeglied mit einer zweiten Verzahnung eines zweiten Getriebegliedes. Die zweite Verzahnung kann an einem weiteren Zahnrad oder an einer Zahnstange ausgebildet sein.

Die Zahnform und ihre geometrischen Abmessungen werden grundsätzlich aufgrund der erwarteten Belastungen durch Berechnung festgelegt. Unabhängig von der gewählten Zahnform sind bei bekannten Verzahnungen zumeist nicht mehr als zwei Zähne - bei Schrägverzahnung auch mehr als 2 - von jeder Verzahnung gleichzeitig in einer Weise miteinander im Eingriff. Die häufigste Verzahnungsform ist hierbei die Evolventenverzahnung. Ein anderer Verzahnungstyp ist die Wildhaber/Novikov-Zahnung, die den Vorteil hat, bei relativ geringer Hertz'scher Pressung der Zähne hohe Kräfte übertragen zu können.

Die in der Regel aus einem metallischen Werkstoff erzeugten Zahnradgetriebe haben den Nachteil einer aufwendigen Herstellung.

Auch Rollen- oder Kugelumlaufspindeln sind als Getriebe- bzw. Antriebskonzept bekannt. Hier wird eine Mutter über Kugeln, Rollen oder andere Wälzkörper in einem Aussengewinde einer Spindel gelagert. Eine Drehbewegung der Spindel kann so in eine lineare Bewegung der Mutter transformiert werden. Solche Kugelumlaufspindeln können aber nicht in allen Bereichen eingesetzt werden; insbesondere sind bei langen Spindeln die Verfahrgeschwindigkeiten durch Schwingungen stark limitiert.

Ein weiterer Getriebetyp nutzt im wesentlichen Reibkräfte und weist hierzu ein Reibrad auf, das mit einem anderen Reibrad oder einer geradlinigen Reibfläche in Wirkverbindung steht. Das Antriebs- bzw. Getriebekonzept hat jedoch den Nachteil, dass zumindest in geringem Umfang stets Schlupf vorhanden ist. Hierdurch sind Reibradgetriebe für Anwendungen ungeeignet, bei denen präzise Antriebsbewegungen erforderlich sind. Schlupf tritt insbesondere bei hochdynamischer Beanspruchung auf, weshalb Reibradgetriebe auch für solche Anwendungen wenig geeignet sind. Des weiteren können mit Reibradgetrieben nur dann grössere Kräfte übertragen werden, wenn mit ihnen hohe Normalkräfte aufgebaut werden. Hohe Normalkräfte bedingen aber wiederum ein grosses Bauvolumen, das oftmals unerwünscht ist. Die speziellen Traktionsfluide können im offenen Linear-Führungssystem nicht verwendet werden. Die Leistungsdichte bei Reibrädern aus Gummi oder ähnlichen Elastomeren ist viel zu gering.

Durchaus bekannt ist die Übertragung mit einem geführten Zahnriemen, der beispielsweise mit Umlenkrollen etc. über ein Zahnrad geführt wird. Bekannte Ausführungen dazu werden nachfolgend im Einzelnen diskutiert. Bei einer Ausführung mit einem feststehenden Motor, der über ein Ritzel und Zahnriemen einen Schlitten über Umlenkrollen antreibt, ergeben sich als Nachteile, dass der Zahnriemen in Längsrichtung federn kann, in Querrichtung schwingen kann, gut vorgespannt sein muss, damit er nicht überspringt und damit Probleme bei der Genauigkeit der Übertragung gegeben sind. Bei einer Ausführung, bei der ein feststehender Motor über ein Ritzel und Zahnriemen einen langen Tisch antreibt, ergeben sich immer noch Schwierigkeiten bezüglich der Steifigkeit in Längsrichtung und damit sind wiederum Probleme bei der Genauigkeit der Übertragung gegeben. Bei der Ausführung durch einen mitfahrenden Motor ergeben sich Probleme mit der Steifigkeit in Längsrichtung, bei der Genauigkeit der Übertragung und durch die Kabelführung für die Energieversorgung des Motors. Wenn der Zahnriemen in am Bett befestigter Zahnstange eingreift, ist eine zusätzliche Zahnstange mit den Problemen einer Befestigung sowie durch die Kabelführung für die Energieversorgung des Motors zu lösen. Wenn ein Ritzel einen kurzen Endlos-Zahnriemen treibt, der in eine am Bett befestigte Zahnstange eingreift, ergeben sich die Nachteile, dass eine zusätzliche Zahnstange erforderlich ist, der Zahnriemen zwischen den beiden Rollen nicht in die Zahnlücken gedrückt wird, was einen Steifigkeitsverlust zur Folge hat und zudem wiederum durch die Kabelführung für die Energieversorgung des Motors ein zusätzlicher Aufwand getrieben werden muss.

Der Erfindung liegt deshalb die Aufgabe zugrunde, eine Möglichkeit zur Übertragung einer Antriebsbewegung zu schaffen, die auch bei hohen Kräften schlupf- und spielfrei ist und die eine hohe Dynamik bei grosser Steifigkeit der Übertragungsvorrichtung zulässt. Vorteilhaft im Sinne der Aufgabe wäre dabei eine Lösung, die für verschiedene Einzelheiten des Antriebs einsetzbar ist, also eine möglichst allgemeine Lösung.

Die Aufgabe wird bei einer Übertragungsvorrichtung der eingangs genannten Art erfindungsgemäss dadurch gelöst, dass eine Vergrösserung der Eingriffsstrecke durch Verformung von einem oder beiden der Übertragungselemente stattfindet, wobei sich die Verformung an der jeweiligen Stelle des Übertragungselements durch den Eingriff ausbildet und sich zurückbildet, sobald die Stelle ausser Eingriff gerät. Dabei haben die Massnahmen der Erfindung zunächst einmal zur Folge, dass ein gegenüber einer herkömmlichen Zahnrad-/Zahnstange- oder Zahnrad-/Zahnrad-Anordnung eine verbesserte Übertragungsgeometrie und gegenüber einer herkömmlichen Zahnriemenkonstruktion eine höhere Tangentialsteifigkeit gegeben wird. Die Verformung ist in dem Sinne partiell, dass sie nur an der Stelle oder in dem Bereich des Eingriffs des verformten Übertragungselementes stattfindet. Vorteilhaft ist es, wenn weiterhin die Verformbarkeit des Übertragungselementes senkrecht zur Antriebsrichtung mit einer hohen Tangentialsteifigkeit in Antriebsrichtung und einer hohen Quersteifigkeit in die dritte Richtung gekoppelt ist, was zum Erfolg der erfinderischen Massnahmen weiterhin beiträgt.

Die partielle Verformung soll nachfolgend noch weiter diskutiert werden. Ihr eigentümlich ist die Eigenschaft der Übertragungselemente, dass - im Falle einer ebenen Zahnstange oder eines Zahnriemens und eines Zahnrades als die beiden Übertragungselemente - die Zahnstange, z.B. an ihrer mit den Verzahnungselementen versehenen Oberfläche, elastisch ausgebildet ist und dem Zahnrad erlaubt, in sie hineinzudrücken. Damit unterscheidet sich die Übertragung gemäss der vorliegenden Erfindung von den oben genannten, bekannten Ausführungen mit einem geführten Zahnriemen der oben diskutierten Arten, bei dem völlig andere Steifigkeits- und Kräfteverhältnisse auftreten.

Dieser Zusammenhang soll auch nochmals an einem verformbaren Zahnrad grundsätzlich erläutert werden. Dabei ist wiederum das Zahnrad an seiner Oberfläche elastisch ausgebildet und erlaubt dem gegenüberliegenden Zahnrad oder der gegenüberliegenden Zahnstange, mit dem es in Eingriff ist, in das Zahnrad hineinzudrücken. In diesem Fall wird aber wiederum das Zahnrad nicht oder nur gering in seiner Position verändert werden, wenn es mit dem gegenüberliegenden Übertragungselement in Eingriff steht und die Kraft übertragen wird und seine Achse wird in der Position nicht oder nur unerheblich verändert, was zu einer geringen Positionsabweichung führt.

Es ist somit erfindungsgemäss vorgesehen, dass eine Verformung von einem oder beiden der Übertragungselemente in einer Richtung stattfindet, die zumindest in etwa radial zu dem zumindest einen gekrümmten Übertragungselement verläuft. Aufgrund der Verformung entsteht ein grösserer Umschmiegungs- bzw. Kontaktwinkel, in dem die beiden Übertragungselemente miteinander in Kontakt stehen. Die so erzielte Verlängerung der Eingriffstrecke der beiden Übertragungselemente führt zu einer Erhöhung der Anzahl von Eingriffselementen, die momentan zur Übertragung von Kräften zwischen den beiden Übertragungselementen beitragen.

In einer bevorzugten Ausführungsform können die Eingriffselemente kleiner gestaltet sein, als dies bei herkömmlichen Verzahnungen der Fall ist. Die bekannten Berechnungsmethoden zur Bestimmung der Zahngrösse gehen von einer angenommenen Zahnbelastung aus, von der dann die Zahngrösse bestimmt wird. Die Zahngrösse ist dann wiederum vorgegebene Grösse zur Bestimmung des Durchmessers eines Zahnrades. Da erfindungsgemäss eine grössere Eingriffstrecke der beiden Übertragungselemente erzielbar ist, kann auch die Grösse der Eingriffselemente kleiner ausfallen, als dies bei herkömmlichen Übertragungselementen der Fall ist.

Bei der Dimensionierung und Werkstoffwahl von Zahnräder wird üblicherweise von einer zu erreichenden Zahnfussfestigkeit oder Grübchentragfähigkeit ausgegangen. Basierend hierauf wird die Grösse des Zahnrades und der Verzahnung bestimmt. Bei erfindungsgemässen Übertragungselementen ist es hingegen möglich, die Grösse der einzelnen geometrisch vorbestimmten Eingriffselementen, wie beispielsweise eine Verzahnung, deutlich kleiner zu wählen, als dies bisher der Fall war.

Die Verlängerung der Eingriffstrecke wird vorzugsweise über eine elastische Verformung von einem oder beiden Übertragungspartnern erzielt. Die erzielte Verlängerung der Eingriffstrecke kann das Vierfache und mehr ((siehe oben)) der Eingriffstrecke betragen, die sich ohne die elastische Verformung ergeben würde.

Eine Verkleinerung der einzelnen Eingriffselemente kann bei bestimmten Ausführungen der Erfindung bei der Fertigung des Übertragungselementes zu weiteren erheblichen Vorteilen führen. Werden die Eingriffselemente unter Verwendung von spanenden Fertigungsverfahren, wie beispielsweise Fräsen oder Schleifen, erzeugt, so fällt ein geringeres Zerspannungsvolumen an, was die Herstellbarkeit erleichtert und vergünstigt.

In einer solchen, besonderen Ausführungsform der Erfindung kann die Verformung vorgesehen sein, dass eine Verbesserung Eingriffscharakteristik durch Verformung von einem oder beiden der Übertragungselemente stattfindet, in dem nicht mehrere Zähne der beiden Übertragungselemente gleichzeitig in Eingriff stehen, sondern vielmehr qualitativ der Eingriff eines Zahns über eine längere Zeit wirksam beibehalten wird. Auch in dieser Ausführungsform ist vorgesehen, dass sich die Verformung an der jeweiligen Stelle des Übertragungselements durch den Eingriff ausbildet und sich zurückbildet, sobald die Stelle ausser Eingriff gerät. Und auch hier ist die Verformung in dem Sinne partiell, dass sie nur an der Stelle oder in dem Bereich des Eingriffs des verformten Übertragungselementes stattfindet.

Die Vorteile der vorliegenden Erfindung werden - am Beispiel einer speziellen Ausführung mit einem Zahnriemen und einem Zahnrad - hier nochmals kurz zusammengefasst, dass nämlich
- die direkte Umsetzung der Drehbewegung in eine Linearbewegung möglich ist,
- eine allfällige, druckweiche Zwischenlage die Kreisformfehler der Ritzelverzahnung schluckt, was zu Abstandtoleranzen Ritzel-Schiene und ein Einfedern der Profilschienenführung unter Last führt,
- die schubsteife Zwischenlage den Kraftfluss leitet,
- eine gleichbleibende Genauigkeit erzielt werden kann, wobei systematische Positionsabweichungen in den beigeordneten Steuerungsrechnern abgelegt werden können, da sie gleich bleiben.

Die vorliegende Erfindung hat besondere Vorteile im Zusammenhang mit der Umsetzung einer Rotations- in eine Translationsbewegung. Hier ist ein Antrieb für die Erzeugung einer translatorischen Relativbewegung zwischen einer Schiene der Führung und dem auf der Schiene angeordneten Wagen erforderlich. Um die in vielen Fällen vorgesehene rotative Antriebsbewegung eines Elektromotors in die translatorische Relativbewegung umzusetzen, kann eine erfindungsgemässe Übertragungsvorrichtung vorgesehen sein.

Weitere bevorzugte Ausgestaltungen der Erfindung ergeben sich aus den abhängigen Ansprüchen und den Zeichnungen.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Vorrichtung zur vorliegenden Erfindung erläutert wird; es zeigen:
- Fig. 1: eine schematische Darstellung einer ersten Ausführung der beiden Übertragungselemente mit einem elastischen Zahnrad und einer Zahnstange oder einem Zahnriemen im Zustand des Eingriffs;
- Fig. 2: eine schematische Darstellung einer Ausführungsvariante der beiden Übertragungselemente mit einem starren Zahnrad und einer elastischen Zahnstange oder einem elastischen Zahnriemen im Zustand des Eingriffs;
- Fig. 3: eine Darstellung der Federverhältnisse gemäss der Ausführung nach Fig. 2;

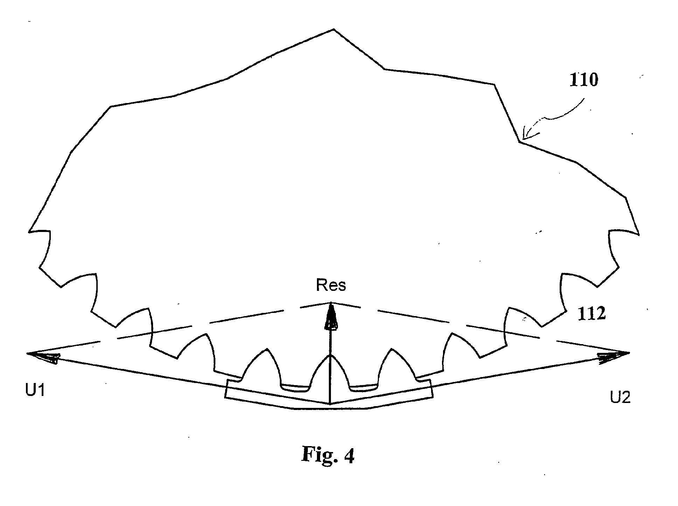

- Fig. 4: eine Darstellung der resultierenden Kräfte bei der Ausführung gemäss Figur 2;
- Fig. 5: eine perspektivische Darstellung einer speziellen Form gemäss der zweiten Ausführung gemäss Fig. 2 mit einer schlauchartigen Konstruktion mit hoher Tangentialsteifigkeit;
- Fig. 6: eine Querschnittdarstellung in Längsrichtung gemäss Figur 5;
- Fig. 7: eine perspektivische Darstellung einer weiteren, speziellen Form gemäss der zweiten Ausführung gemäss Fig. 2 mit einer mehrwandigen Konstruktion mit hoher Tangentialsteifigkeit.
- Fig. 8: eine Darstellung einer weiteren Ausführungsform der Erfindung;
- Fig. 9: eine Darstellung mit einer anderen Perspektive gemäss der Ausführungsform nach Fig. 8;
- Fig. 10: eine perspektivische Darstellung einer weiteren Ausführung mit spezieller Form mit einem radialelastischen Zahnrad mit hoher Tangentialsteifigkeit und einer starren Zahnstange;
- Fig. 11: eine Seitenansicht gemäss Fig. 10 zur Veranschaulichung der geometrischen Verhältnisse;

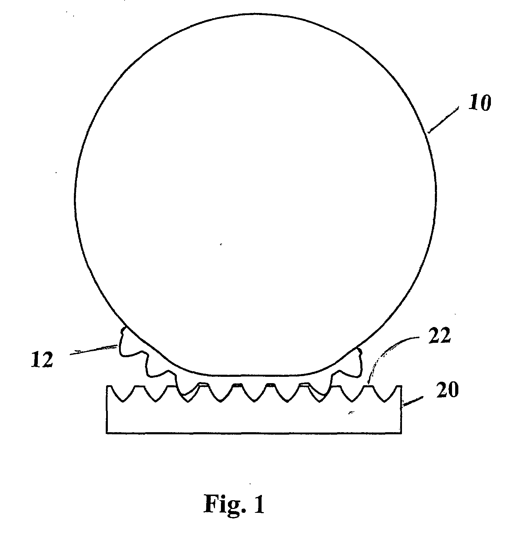

In Figur 1 ist ein Übertragungsmechanismus gezeigt, bei dem - als erste Form der Ausführung der Erfindung - auf eine im wesentlichen feste Zahnstange 10 von einem partiell elastischen Zahnrad 20 eine Kraftübertragung stattfindet. Die Vergrösserung der Eingriffsstrecke wird durch Verformung des Zahnrades 10 erzeugt. Durch die geometrische Anordnung und die Verformbarkeit - im vorliegenden Ausführungsbeispiel der äusseren Schicht des Zahnrades 10 - wird an der jeweiligen Stelle des Zahnrades durch den Eingriff ausbildet. Die Verformung wird zurückbildet, sobald die Stelle ausser Eingriff gerät. Die Verformung ist in dem Sinne partiell, dass sie nur an der Stelle oder in dem Bereich des Eingriffs des verformten Zahnrades 10 stattfindet. In diesem Ausführungsbeispiel ist die Verformbarkeit des Zahnrades 10 senkrecht zur Antriebsrichtung mit einer hohen Tangentialsteifigkeit in Antriebsrichtung und einer hohen Quersteifigkeit (also orthogonal zur Antriebsrichtung und in Richtung der Verformbarkeit) gekoppelt, wodurch eine hohe Übertragungsgenauigkeit erzielt wird.

Wie insbesondere in der Darstellung von Fig. 1 gezeigt ist, ist das Zahnrad im Eingriffsbereich elastisch eingefedert, wodurch sich eine Abplattung bzw. Abweichung von der kreisrunden Form ergibt. Die zulässige Einfederung und Abplattung richtet sich nach den Eigenschaften der verwendeten Werkstoffe.

Die gezeigte Anordnung kommt insbesondere dort zum Einsatz, wenn eine begrenzte Einzelzahnbelastung einen solchen Umschlingungswinkel erfordern, dass mehrere Zähne gleichmässig tragen. Die zum Einsatz kommenden trapez- oder kreisbogenförmigen Zahnformen erfordern eine Orthogonalkraft, die jeden Zahn in die Lücke drückt. Bei dem Zahnrad 10 dieses Ausführungsbeispiels ist dieser Sachverhalt durch die Vorspannung und den resultierenden Kraftvektor zum Zentrum des Zahnrades hin gegeben.

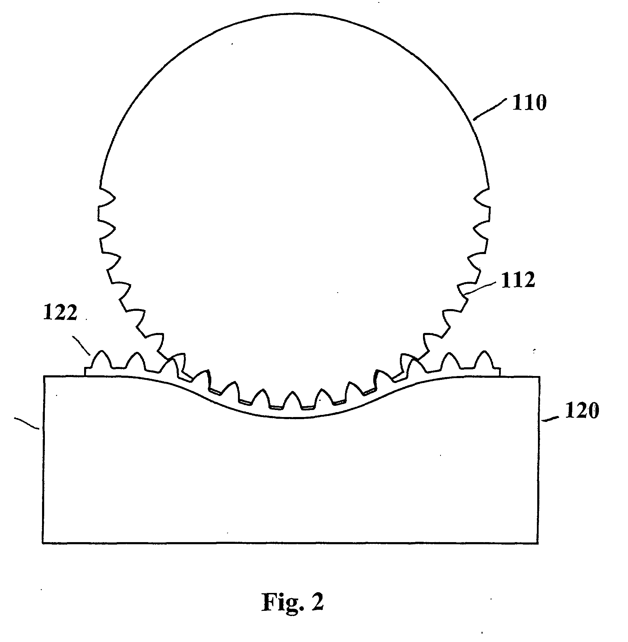

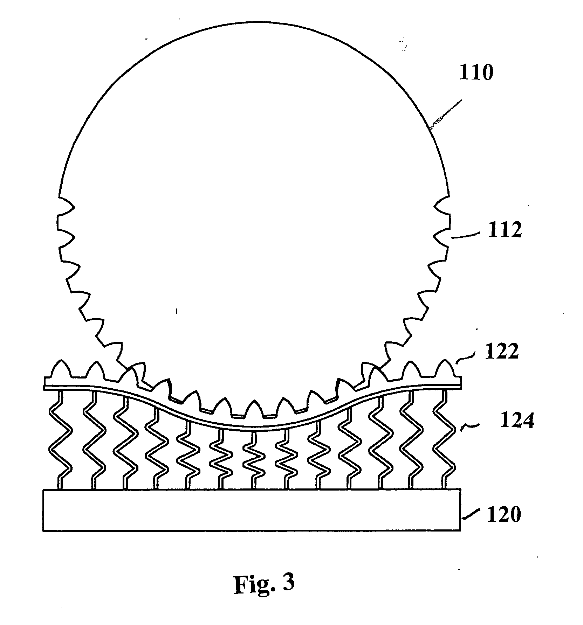

In einer in Fig. 2 und 3 dargestellten zweiten Ausführungsform ist ein in sich steifes metallisches Zahnrad 110 vorgesehen. Das Zahnrad 110 kämmt mit einer längserstreckten Zahnstange 120, deren Verzahnungsstreifen 122 auf einer elastischen Schicht 124 befestigt ist. Die elastische Schicht 124 wiederum ist auf einer in sich steifen metallischen Stange befestigt. Im Eingriffsbereich des Zahnrades 110 in die Zahnstange 120 wird die elastische Schicht 124 komprimiert. Der Verzahnungsstreifen 122 folgt der elastischen Auslenkung der Schicht 124, woraus im Bereich der jeweiligen momentanen Eingriffsstrecke eine reversible Anschmiegung der Zahnstange 120 an die Krümmung des Zahnrades 110 resultiert. Der Zahnstreifen 120 ist beispielsweise in einem untersuchten Ausführungsbeispiel über einen Winkel- bzw. Umfangsbereich des Zahnrades von 45° mit diesem in Eingriff.

In einem weiteren, nicht dargestellten Ausführungsbeispiel können auch beide Übertragungselemente, also Zahnrad und Zahnstange, partiell elastisch verformbar sein. In einer noch anderen, nicht dargestellten Ausführungsform ist vorgesehen, dass zwei Zahnräder ineinander greifen. Zumindest eines der Zahnräder, alternativ auch beide, sind entsprechend dem in Fig. 1 dargestellten Zahnrad aufgebaut und somit verformbar.

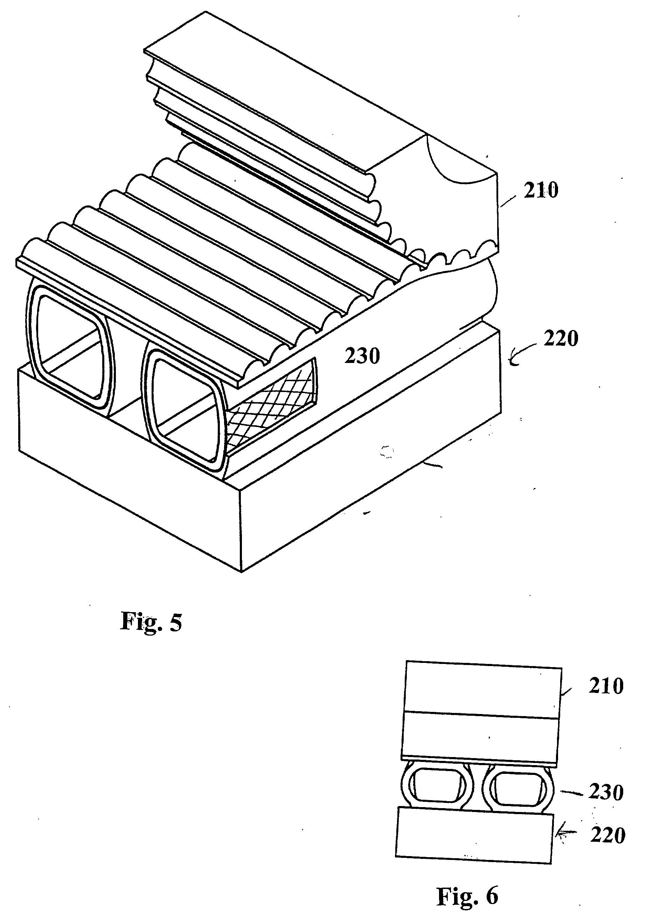

Gemäss einem anderen Aspekt der vorstehend beschriebenen Erfindung wird in einem solchen Ausführungsbeispiel gemäss Fig. 5 die elastisch ausgebildete Zahnstange 120 aus Figur 2 durch einen Zahnriemen 220 ersetzt. Das Zahnrad 110 bzw. 210 erfährt in diesem Fall keine Änderung ihres Wesens.

Die Konstruktion ist durch zwei schlauchartige Einlagen 230 gekennzeichnet, die insbesondere eine hohe Längsstabilität im Vergleich zur Elastizität in Eindrückrichtung gewährleistet. Weiterhin weist diese Konstruktion auch eine hohe Querstabilität (also orthogonal zur Antriebsrichtung und in Richtung der Verformbarkeit) im Sinne der oben genannten Anforderungen auf.

Die dargestellte Anordnung kommt wiederum dann zum Einsatz, wenn eine begrenzte Einzelzahnbelastung einen solchen Umschlingungswinkel erfordern, dass mehrere Zähne gleichmässig tragen. Die zum Einsatz kommenden trapez- oder kreisbogenförmigen Zahnformen erfordern wiederum eine Orthogonalkraft, die jeden Zahn in die Lücke drückt. Auch bei dem Zahnrad 210 dieses Ausführungsbeispiels ist dieser Sachverhalt durch die Vorspannung und den resultierenden Kraftvektor zum Zentrum des Zahnrades hin gegeben. Die Orthogonalkraft weist hierbei nur eine geringe Hysterese auf, damit auch beim schnellen oszillierenden Betrieb die Kraft nicht nachlässt. Weiterhin weist die Orthogonalkraft keinen Verlust infolge Kriechen auf, wenn beispielsweise das Ritzel häufig oder bevorzugt an der gleichen Position verbleibt. Die Orthogonalkraft ist unabhängig von der Verfahrgeschwindigkeit. Die Ritzelbewegung und die Längsposition sind mit hoher und überall gleicher Steifigkeit verknüpft, so dass auch bei Laständerungen die Position erhalten bleibt und keine Schwingungen auftreten. Somit werden stochastische Abweichungen der Position vermieden, systematische Abweichungen können durch die NC-Steuerung kompensiert werden. Optimierungsparameter zur Systemauslegung sind dabei die Krümmungsänderung des Riemens neben der Ritzel-Kontaktstelle und die Dehnung des freien Riemens bis zum Riemenende durch die Nachgiebigkeit des Riemens und die Schubübertragung vom Riemen zum Bett.

Bei der Auslegung der konkreten Übertragung ergibt sich aus der gewünschten Vorschubkraft der notwendige Umschlingungswinkel aus der Einzelzahnbelastung und dem Durchmesser des Ritzels. Die Gesamt-Eindrucktiefe und die zulässige Verformung der elastischen Unterlage sowie die erforderliche Orthogonalkraft führen auf die Dicke der elastischen Unterlage. Proportional zur Dicke der elastischen Unterlage nimmt die Schubdeformation in Vorschubrichtung zu. Der Zahnriemen weist eine Biegesteifigkeit auf und ist optional an den Enden vorgespannt. Die elastische Unterlage weist eine Drucksteifigkeit und eine Schubsteifigkeit auf. Drückt das Ritzel den Zahnriemen in die elastische Unterlage ein, dann beeinflussen diese Merkmale den Verlauf des Riemens vom Ritzel zum unverformten Zustand.

Eine schlauchartige Konstruktion hat wegen der Kurzzeitverformung - die Rückstellkraft darf keine Hysterese aufweisen - wie auch wegen der Langzeitverformung - über Jahre hinweg ist ein Vorspannungsverlust über ein Drittel jedenfalls unakzeptabel - erhebliche Vorteile gegenüber der ebenfalls untersuchten Schaumstoffvariante für die Verformbarkeit. Auch untersucht wurde die Schubübertragung mit einem homogenen Material. Dies ist jedoch für eine steife Schubübertragung und eine akzeptable Werkstoffbeanspruchung infolge Umschlingung des Ritzels und lokaler Einfederung innerhalb von wenigen Prozenten Dehnung nicht realisierbar. Im Ausführungsbeispiel ist die Schlauchkonstruktion mit gekreuzt eingelegten Armierungsfasern versehen, um die erforderliche Steifigkeit zu erreichen. Im Ausführungsbeispiel wurden Kevlarfasern verwendet, es ist jedoch auch der Einsatz von anderen zugsteifen, biegeschlaffen Werkstoffen möglich.

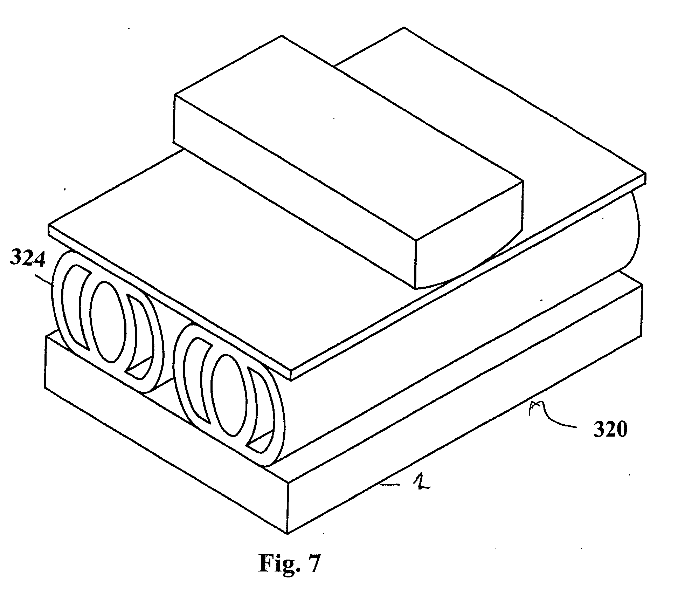

Eine weitere Ausführungsvariante wird in Figur 7 dargestellt, bei der mehrere Stützwände nebeneinander so angeordnet sind, dass sie gleichsinnig ausbauchen, damit sie sich nicht gegenseitig behindern.

Die Funktionsaufteilung wird in Materialien mit verschiedenen Eigenschaften durchgeführt. Dabei wird mittels separater oder eingebetteter Fäden oder Litzen erreicht, dass die Kräfte vom Zahnriemen 320 in flachem Winkel zum Untergrund geleitet werden. Gedanklich kann die Kraftübertragung dabei in Teilfunktionen aufgeteilt werden, nämlich in eine Kraftüberleitung vom Zahnriemen 320 zu den Fäden oder Litzen und die Kraftübertragung von den Fäden oder Litzen in den Untergrund. Dabei muss durch entsprechende Sicherungsmassnahmen darauf geachtet werden, dass die schräg nach unten gerichteten Fäden oder Litzen, die in den Verankerungen im Zahnriemen und im Untergrund eine Vertikalkomponente erzeugen, nicht ausreissen. Da Fäden oder Litzen nur Zugkräfte in eine Richtung übertragen können, ist eine weitere Gruppe in ihrer Gegenrichtung erforderlich. Die vertikale Federung, die das Eindrücken des Ritzels 310 und die erforderliche Vorspannung ermöglicht, spannt die schrägen Fäden oder Litzen vor, damit die Fäden oder Litzen unter dem durch das Ritzel herunter gedrückten Zahnriemen 320 nicht lose werden und dann keine Vorschubkraft mehr übertragen können. Der Neigungswinkel beeinflusst die Vertikalkomponente und somit auch die Längssteifigkeit. Im nicht verformten Zustand ist die Stützwand 324 nur leicht gekrümmt, braucht beim Einfedern aber weiter aus und somit wird die Armierung nicht schlaff. Damit die Armierung beim Einfedern nicht nach innen aus der Stützwand 324 ausreisst, ist sie im Ausführungsbeispiel zur Aussenseite hin angebracht.

Anstelle eines Zahnriemens sind auch andere Übertragungselemente einsetzbar, die ein formschlüssiges Kontaktelement und Schubkraft-Übertagungselemente aufweisen.

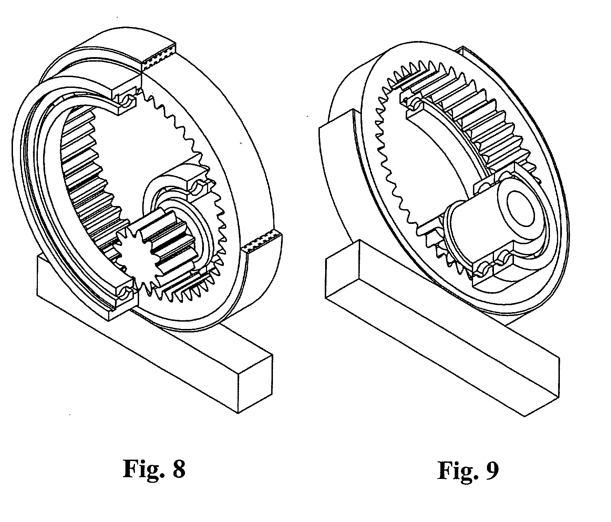

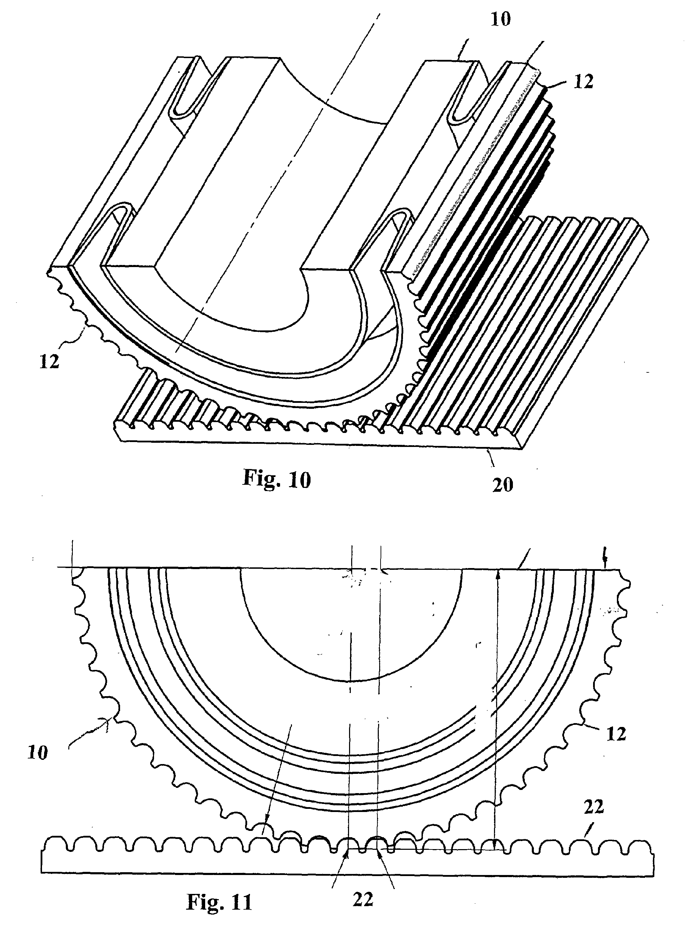

Eine Ausführungsvariante mit einem elastischen Zahnrad und einer Zahnstange gemäss Fig. 1 ist in Fig. 8 dargestellt. Eine Vergrösserung des Durchmessers führt zu einer kleineren Krümmungsänderung und damit zu einer kleineren Randbiegespannung, was insbesondere bei härteren Werkstoffen mit höherem Elastizitätsmodul von Bedeutung ist, wie beispielsweise auch bei Verwendung von faserverstärktem PEEK (PolyEtherEtherKeton). Am Aussenring ist eine, zeichnerisch nicht dargestellte, feine Struktur zur formschlüssigen Kraftübertragung vorhanden. Das elastische Zwischenelement zwischen Aussenring und Nabe kann ähnlich wie bei Fig. 10 ausgeführt sein.

Der Fachmann wird erkennen, dass in diesem Ausführungsbeispiel von den herkömmlichen Ausgestaltungen eines Zahnriemens, die oben beschrieben wurden, mit dem erfindungsgemässen Aufbau wesentlich abgewichen wurde, um die Merkmale der Erfindung durchführen zu können und nicht von dem Wesen der partiellen Verformung abzuweichen.

Während bei den vorgenannten Ausführungen eine erhöhte Vorschubkraft durch eine elastisch verformte und vergrösserte Kontaktfläche ohne Relativbewegung erreicht wurde, wird in der Ausführung nach Fig. 10 die elastische Verformung eines Aussenringes dazu verwendet, dass eine eng geschmiegte Kontaktfläche periodisch die Tangentialkraft überträgt.

Die bekannte Wildhaber-/Novikov-Verzahnung hat infolge der guten Schmiegung eine hohe Grübchentagfähigkeit. Der Achsabstand muss jedoch genau eingehalten werden. Wegen des erforderlichen Flankenspiels ist ein spielfreier Antrieb nicht möglich. Da die Eingriffslinie nur aus einem momentanen Kontakt besteht ist für eine gleichmässige Übertragung eine Schrägverzahnung mit einer Sprungüberdeckung ε_{β} > 1 erforderlich. Da der konvexe Zahnradius kleiner als der konkave Radius ausgeführt sein muss ergibt sich eine in Zahnbreitenrichtung orientierte Hertzsche Kontaktellipse, deren Breite nur einen Bruchteil der Zahnbreite beträgt.

Beschreibung der Funktion von Ausführung nach Fig. 10 anhand Fig. 11: Das Nabenzentrum C bewegt sich horizontal zum Punkt D. Dabei dreht sich die konkave Rad-Zahnfläche um Drehpunkt A und der elastischer Zahnring federt dabei aus. Beim Punkt D wechselt der Kontakt vom Drehpunkt A nach B. Das Nabenzentrum bewegt sich weiter zum Punkt E und der Zahnring federt wieder ein.

Berechnungen haben folgende Merkmale ergeben:
- Der kleine Ritzeldurchmesser ermöglicht einen Motor-Direktantrieb ohne Reduktionsgetriebe.
- Die Translations-Geschwindigkeit ist proportional zur Winkelgeschwindigkeit (v = ω * h ; h = vertikaler Abstand vom Zentrum D zu den Punkten A bzw. B).
- Die enge Schmiegung ergibt eine gleichmässige und niedrige Flächenpressung. Durch den elastischen Aussenring ist der Antrieb abstands-unempfindlich.
- Wird der konvexe Radius durch eine leicht gotische Form ersetzt oder im Grund eine Entlastungsnut angebracht, dann kann eine Umkehrspanne beim Richtungswechsel vermieden werden.
- Durch eine Variation des Kontaktradius können Kontakt-Flächenpressung und Biegebeanspruchung durch die Schwellbeanspruchung des elliptisch verformten Ringes optimiert werden.
- Die Verformung des kreisförmigen Zahnringes zu einer - pulsierenden - Ellipse beträgt lediglich ± 1/10 mm.
- Die untersuchte Baugrösse ermöglicht Vorschubkräfte bis zu mehreren kN.
- Der kleine Reibradius bewirkt eine sehr geringe Verschiebereibung.
- Für die angenommene Vorschubkraft liegt das Produkt aus Flächenpressung und Gleitweg pro Meter in der Grössenordnung einer bekannt zuverlässigen Kugel-Linearführung.

Als Werkstoff für den verzahnten Aussenring können die bekannten Zahnrad-Werkstoffe zum Einsatz gelangen, wobei spezielle Anforderungen (Schmierbedingung, Umgebung) zu berücksichtigen sind. Eine Gleitschicht ist ebenfalls möglich. Hartkunststoffe mit Faserverstärkung oder andere geeignete Werkstoffe z.B. einen elastischen Keramikwerkstoff.

Die kleinen Zähne der Zahnstange können - im Gegensatz zu den weit grösseren Zähnen einer Evolventenverzahnung - durch Umformen erzeugt werden.

Die Auslegung des zwischen Aussenring und Nabe liegenden elastischen Feder- und Schubübertragungs-Elementes ist durch die geringe elliptische Verformung leicht zu realisieren.

Die Vorteile dieser Ausführung werden hier nochmals zusammengefasst:
- Formschlüssige Kraftübertragung
- Spielfreie und umkehrspannenfreie Bewegungsübertragung möglich
- Durch mehr oder weniger radiale Verformung entsteht vergrösserte Kontaktfläche => niedrigere Kontaktbeanspruchung => höhere Vorschubkraft möglich
- Zusätzliche Kontakt-Formelemente kommen zum Eingriff; ohne Relativbewegung (ausgenommen Ein- und Auslauf)
- Mit (rotativer) Relativbewegung Bewegung um ein Kontakt-Formelement

## Patentansprüche

1. Übertragungsvorrichtung zur Übertragung einer Antriebsbewegung von einer Antriebsseite auf eine Abtriebsseite, wobei zur Übertragung ein erstes Übertragungselement (10, 110) mit einem zweiten Übertragungselement (20, 120) in Wirkverbindung steht, eines der beiden Übertragungselemente (10, 110) von der Antriebsbewegung angetrieben wird, beide Übertragungselemente (10, 20; 110, 120) mit geometrisch bestimmten Eingriffselementen (12, 22; 112, 122) versehen sind, die durch einen im wesentlichen formschlüssigen Eingriff ineinander im Bereich einer Eingriffstrecke die Übertragung der Antriebsbewegung von einem auf das andere Übertragungselement ermöglichen, wobei zumindest eines der Übertragungselemente (10, 110) eine mit einer Krümmung versehene Aussenfläche aufweist, an der Eingriffselemente (112) angeordnet sind, **dadurch gekennzeichnet, dass** zur Vergrösserung der Eingriffsstrecke zumindest eines der Übertragungselemente (10; 120) im Bereich der Eingriffstrecke verformbar ist, wobei sich die Verformung an der jeweiligen Stelle des Übertragungselements (10; 120) durch den Eingriff ausbildet und sich zurückbildet, sobald die Stelle ausser Eingriff gerät.

2. Übertragungsvorrichtung nach Anspruch 1, **dadurch gekennzeichnet, dass** von jedem der beiden Übertragungselemente eine Vielzahl von Eingriffselementen (12, 22; 112, 122), vorzugsweise mehr als zwei, gleichzeitig miteinander in Eingriff bringbar sind.

3. Übertragungsvorrichtung nach einem der vorhergehenden Ansprüche, **dadurch gekennzeichnet, dass** ein Übertragungselement (20, 120) als im wesentlichen längserstreckte Stange oder als Zahnriemen und das andere Übertragungselement (10, 110) als Rad ausgebildet ist, wobei das Rad rotativ antreibbar ist und durch Eingriff der Eingriffselemente (12, 22; 112, 122) der beiden Übertragungselemente (20, 120) abtriebsseitig eine Bewegung zur Verfügung steht, die zumindest eine translatorische Komponente aufweist.

4. Übertragungsvorrichtung nach Anspruch 3, **dadurch gekennzeichnet, dass** das als im wesentlichen längserstreckte Stange oder als Zahnriemen ausgebildete Übertragungselement (120) bezüglich der Richtung senkrecht zur Längserstreckung elastisch ausgebildet ist.

5. Übertragungsvorrichtung nach Anspruch 4, **dadurch gekennzeichnet, dass** das als im wesentlichen längserstreckte Stange oder als Zahnriemen ausgebildete Übertragungselement (120) eine Konstruktion (124) aufweist, die in ihrer Längsrichtung erheblich steifer ist als in der Richtung, in der sie durch die Wirkverbindung mit dem anderen Übertragungselement (110) eingedrückt wird.

6. Übertragungsvorrichtung nach einem der vorhergehenden Ansprüche 1 oder 2, **dadurch gekennzeichnet, dass** beide Übertragungselemente als Rad ausgebildet sind, wobei ein Rad rotativ antreibbar ist und durch Eingriff der Eingriffselemente der beiden Übertragungselemente abtriebsseitig eine Bewegung zur Verfügung steht, wobei eines der Räder elastisch ausgebildet ist.

7. Übertragungsvorrichtung nach einem der vorhergehenden Ansprüche, **dadurch gekennzeichnet, dass** die Eingriffselemente (12, 22; 112, 122) als Verzahnung ausgebildet sind.

8. Linearbewegungsführung mit einer Führungsschiene, auf der ein Wagen angeordnet ist, der aufgrund einer Antriebsbewegung eines Antriebs entlang einer Längsbewegungsachse relativ zur Schiene translatorisch verfahrbar ist, **dadurch gekennzeichnet, dass** die Antriebsbewegung mittels einer Übertragungsvorrichtung nach einem der vorhergehenden Ansprüche auf den Wagen oder die Führungsschiene übertragbar ist.
